# EUROPEAN PATENT SPECIFICATION

(11) **EP 4 403 268 B1**
(45) Date of publication and mention of the grant of the patent: **24.12.2025**
(21) Application number: 23752227.1
(22) Date of filing: 10.01.2023
(51) Int. Cl.: B05D 3/02, B05D 3/00, B05C 9/14, B05C 9/04, H01M 4/139, H01M 4/04, H01M 10/058

(54) **ELECTRODE SHEET HEATING DEVICE, AND ELECTRODE SHEET PRODUCTION SYSTEM AND METHOD**
ELEKTRODENFOLIENERWÄRMUNGSVORRICHTUNG SOWIE ELEKTRODENFOLIENHERSTELLUNGSSYSTEM UND -VERFAHREN
DISPOSITIF DE CHAUFFAGE DE FEUILLE D'ÉLECTRODE, ET SYSTÈME ET MÉTHODE DE PRODUCTION DE FEUILLE D'ÉLECTRODE

(30) Priority: 10.02.2022 CN 202210124891
(43) Date of publication of application: 24.07.2024
(73) Proprietor: Contemporary Amperex Technology (Hong Kong) Limited, Central, Central And Western District (HK)
(72) Inventor: WEI, Taichi, Ningde, Fujian 352100 (CN); SONG, Haohua, Ningde, Fujian 352100 (CN); KANG, Xuefeng, Ningde, Fujian 352100 (CN)
(74) Representative: Rowlands, Stuart Michael
(86) International application number: PCT/CN2023/071713
(87) International publication number: WO 2023/151447

(56) References cited:
- CN-A- 107 282 382
- CN-A- 107 398 408
- CN-A- 108 550 794
- CN-A- 108 550 794
- CN-A- 113 903 999
- CN-U- 202 539 030
- CN-U- 206 392 351
- CN-U- 207 719 319
- CN-U- 210 110 928
- CN-U- 214 132 548
- CN-U- 215 465 733
- CN-U- 215 465 733
- CN-U- 215 512 364
- JP-B2- 6 072 900

## Description

### Technical Field

The present application relates to the technical field of electrode plate production system production, and more particularly to an electrode plate heating device and an electrode plate production system and method.

### Background

Because lithium-ion and other batteries have the advantages of high energy density, high power density, multiple cycles, and long storage time, and the like, they have been widely used in electric vehicles.

The electrode assembly in the battery includes an electrode plate. The electrode plate has a current collector, and active material is coated over the surface of the current collector. After coating, it enters an oven for drying. However, the current drying efficiency of the electrode plate is still the main factor limiting improvements to the speed of electrode plate coating.

CN215465733 U discloses an electrode plate heating device according to the prior art.

### Summary of the Invention

The present application proposes an electrode plate heating device and an electrode plate production system and method, which are capable of improving the drying efficiency of the electrode plate.

The invention is an electrode plate heating device according to claim 1 and an electrode plate production method according to claim 12. Preferred features are set out in the dependent claims.

According to a first aspect of the present application, an electrode plate heating device is provided, including:
a box;
two roller groups installed in the box, where the two roller groups are spaced apart along a first direction, each roller group includes at least one first guide roller for the electrode plate to be alternately wound around all the first guide rollers in the two roller groups successively; and
a heating assembly installed in the box and configured to heat the electrode plate after coated.

Each roller group includes a plurality of first guide rollers spaced apart along a second direction, the second direction being perpendicular to the first direction.

Two roller groups are provided in the box, and the electrode plate is alternately wound around the plurality of first guide rollers in the two roller groups successively to form a curved extension path, which can extend the extension length of the electrode plate in the box. If the electrode plate is to run at the same speed, then the electrode plate is enabled to stay longer in the box during heating, which can optimize the drying effect and improve the drying efficiency. If the same drying effect is to be achieved for the electrode plate, then the running speed of the electrode plate can be increased. Therefore, this type of electrode plate heating device can optimize the drying effect and improve the drying efficiency, thereby indirectly increasing the coating speed of the electrode plate.

Moreover, the electrode plate is supported by the first guide roller in the box and can remain in a stable position, which prevents deviation, curling or scratching, and improves the process performance of the dried electrode plate. In addition, the support from the first guide roller keeps the electrode plate in a tightened state under a certain tension force, preventing the electrode plate from wrinkling during the heating process. Moreover, the electrode plate can be in a moving state during the heating process without easily becoming bent and shaped, which facilitates subsequent windup.

In some embodiments, the plurality of first guide rollers of the two roller groups are staggered along the second direction.

This embodiment provides a wavy shape of the extension path of the electrode plate, which can reduce the bending degree of the electrode plate and facilitate windup of the heated electrode plate. Wrinkles on the placed electrode plate will affect the performance of the electrode assembly.

**In** some embodiments, the axis of the first guide roller is arranged along a third direction, the third direction being perpendicular to the first direction.

This arrangement facilitates installation of the first guide rollers, and after the electrode plate enters the box perpendicular to the first direction, it can be smoothly wound around the first guide rollers, preventing the electrode plate from twisting, and allowing the electrode plate to move more smoothly in the box, so that various positions in the electrode plate are heated uniformly.

**In** some embodiments, the first guide roller is rotatably arranged about its own axis, and the rotation direction of the first guide roller in one roller group is opposite to that of the first guide roller in the other roller group.

In this embodiment, the first guide roller is rotatably arranged around its own axis, so that the electrode plate and the first guide roller are in rolling friction, which can reduce the friction force experienced by the electrode plate during its movement and prevent scratches or wears to the active material coated over the electrode plate, and can control the tension force experienced by the electrode plate, enabling more uniform heating of the electrode plate. Optionally, the first guide roller may also be kept fixed so that the electrode plate and the first guide roller are in sliding friction.

In some embodiments, the box is provided with an inlet and an outlet, where the inlet and outlet are respectively located at two ends of the box perpendicular to the second direction, the second direction being perpendicular to the first direction.

The electrode plate heating device further includes a second guide roller and a third guide roller. The second guide roller is arranged at the inlet to guide the electrode plate, and the third guide roller is arranged at the outlet to guide the electrode plate.

In some embodiments, the second guide roller is located between the two roller groups and the inlet along the second direction at a position corresponding to the inlet along the first direction, and is configured to guide the length section of the electrode plate from the inlet to the first one of the first guide rollers; and/or the third guide roller is located between the two roller groups and the outlet along the second direction at a position corresponding to the outlet along the first direction, and is configured to guide the length section of the electrode plate from the last one of the first guide rollers to the outlet.

In this embodiment, by arranging the second guide roller and the third guide roller, the electrode plate can be guided when it enters the box through the inlet or is led out through the outlet, preventing the electrode plate from contacting the inlet or outlet, which causes wears of the active material, and the electrode plate can be guided to the first one of the first guide rollers or out from the last one of the first guide rollers in a suitable path, while maintaining the tension force on the electrode plate.

The heating assembly includes multiple sets of heating components. The multiple sets of heating components are located between the two roller groups along a first direction and are spaced apart along a second direction. Each roller group includes a plurality of first guide rollers spaced apart along the second direction. In the second direction, at least one set of heating components is provided between every two adjacent first guide rollers in the same roller group. The second direction is perpendicular to the first direction.

The heating component is configured to heat the length section of the electrode plate located on both sides of the heating component along the second direction.

The heating component in this embodiment is located between two adjacent length sections of the electrode plate so that the heating component can heat the length sections on both sides at the same time. Compared with the heating method where the heating component is located at the top or bottom of the box to heat one side of the electrode plate, the heat emitted by the heating assembly can be fully utilized to enable uniform distribution of the energy of the heating assembly, increase the heating time for the electrode plate in the box, and consequently improve the drying efficiency of the electrode plate.

In some embodiments, each set of heating components includes a plurality of heating components arranged side by side along the first direction.

In this embodiment, a larger area of the electrode plate can be dried, thereby enabling more uniform drying of the electrode plate and improving the drying efficiency.

In some embodiments, each of the roller groups includes a plurality of first guide rollers spaced apart along the second direction, and the plurality of first guide rollers in one roller group and the plurality of first guide rollers in the other roller group are alternately arranged and staggered along the second direction, and in the second direction, one set of the heating components is provided in correspondence with each of the first guide rollers.

Each set of heating components includes at least one heating component, and each heating component includes a heating element and a protective cover, and the heating element is sleeved with the protective cover.

By providing a protective cover for the heating element, the high-temperature area of the heating element can be prevented from direct high-temperature heating of the electrode plate or the components in the box, so that the heating temperature can be better controlled, thereby improving the safety in operation of the heating component, and the heating temperature for the electrode plate can be reliably controlled within the appropriate process temperature range, while preventing damage to other components in the box as well.

The heating element is an infrared heating element, the protective cover is made of light-transmitting material, and at least one of the protective cover and the infrared heating element is provided with light-blocking layers at both ends along the first direction, so that the infrared light emitted by the infrared heating element irradiates toward both sides along the second direction.

By providing a light-transmitting protective cover and providing light-blocking layers at both ends of at least one of the protective cover and the infrared heating element along the first direction, not only the need for the infrared heating element to irradiate infrared light for heating toward the length sections of the electrode plate at both its sides is satisfied, but also the infrared light can be prevented from irradiating other components in the box, thereby improving the reliability and safety in operation of the electrode plate heating device while ensuring the drying effect of the electrode plate.

In some embodiments, the first direction is the height direction of the box.

In this embodiment, the electrode plate is enabled to have an up and down wavy shape, that is, the amplitude of the extension curve of the electrode plate is along the height direction of the box, and the extension direction of the electrode plate can be adapted to the extension direction of the electrode plate in the two processes of the current electrode plate coating device and electrode plate drying device, enabling smoother movement of the electrode plate, preventing wrinkles on the electrode plate, and improving the process performance of the dried electrode plate.

In some embodiments, the electrode plate heating device further includes a cooling assembly located outside the box and configured to cool the heated electrode plate.

In this embodiment, the temperature of the electrode plate can be quickly lowered after drying of the electrode plate, thereby preventing impact on the subsequent measurement and windup processes of the electrode plate.

In some embodiments, the cooling assembly includes a cooling roller configured to cool the electrode plate wound around it.

In this embodiment, by arranging the cooling roller so that the electrode plate can be fitted to the outer surface of the cooling roller for cooling, the cooling effect can be improved through good fitting and with lower cost.

In some embodiments, a recovery port is provided on the box, and the electrode plate heating device further includes a collection component configured to collect steam and chemical gases generated in the box during the heating process through the recovery port.

In this embodiment, considering the fact that the electrode plate will generate water vapor and chemical gases during the heating process, the water vapor and chemical gases in the box are collected by the collection component through negative pressure during heating or after heating is completed, which can keep a dry environment in the box, improve drying efficiency, and prevent chemical gases from corroding the electrode plate or other components in the box, thereby ensuring the process performance of the dried electrode plate and extending the service life of the electrode plate heating device.

According to a second aspect of the present application, an electrode plate production system is provided, including:
an electrode plate coating device configured to apply an active material onto the electrode plate by coating;
an electrode plate drying device arranged downstream of the electrode plate coating device and configured to bake the coated electrode plate; and
the electrode plate heating device according to any one of claims 1 to 10 that is arranged downstream of the electrode plate drying device and configured to reheat the baked electrode plate.

The electrode plate production system of this embodiment provides an electrode plate heating device downstream of the electrode plate drying device. The electrode plate can be preliminarily dried by the electrode plate drying device, and then enters the electrode plate heating device for secondary drying. It can optimize the drying effect of the electrode plate, shorten the residence time of the electrode plate in the electrode plate drying device, increase the movement speed of the electrode plate, and consequently increase the coating rate of the electrode plate.

According to a third aspect of the present application, an electrode plate production method is provided, including:
applying, by an electrode plate coating device, an active material onto the electrode plate by coating;
baking, by an electrode plate drying device, the coated electrode plate; and
reheating, by the electrode plate heating device according to any one of claims 1 to 10, the baked electrode plate.

In some embodiments, the electrode plate is in the moving state during the coating, baking, and reheating processes of the electrode plate.

### Description of Drawings

The drawings described herein are intended to provide a further understanding of the present application, which constitute a part of the present application. The illustrative embodiments of the present application and the description thereof are for explaining the present application and do not constitute an undue limitation of the present application. In the drawings:
Fig. 1 is a schematic view showing the modular composition of an electrode plate production system according to some embodiments of the present application;
Fig. 2 is a schematic structural view of an electrode plate heating device according to some embodiments of the present application;
Fig. 3 is a front view of a heating component in the electrode plate heating device according to some embodiments of the present application;
Fig. 4 is a schematic side structural view of a heating element in a heating component according to some embodiments of the present application;
Fig. 5 is a schematic end structural view of a heating element in a heating component according to some embodiments of the present application; and
Fig. 6 is a schematic flowchart of an electrode plate production method according to some embodiments of the present application.

In the accompanying drawings, the figures are not necessarily drawn to scale.

### Description of reference numerals:

10. electrode plate heating device; 20. electrode plate coating device; 30. electrode plate drying device;
1. box; 11. inlet; 12. outlet; 13. recovery port; 1A. side wall; 1B. top wall; 1C. bottom wall;
2. roller group; 21. first guide roller;
3. heating assembly; 3'. heating component; 31. heating element; 311. tungsten filament; 32. protective cover; 321. first opening; 322. second opening; 323. flange; 33. light blocking layer;
4. electrode plate;
5. second guide roller;
6. third guide roller;
7. cooling assembly; 71. cooling box; 711. opening; 72. cooling roller; 73. fourth guide roller;
8. collection component;
9. driving assembly; 91. power component; 92. flexible transmission component;
x. first direction; y. second direction; z. third direction.

### Detailed Description

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application.

In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors. Orientation words appearing in the following description are all directions shown in the drawings, and do not limit the specific structure of the present application.

In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

Reference herein to "an embodiment" means that a particular feature, structure, or characteristic described in conjunction with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "a plurality of" refers to two or more (including two), and similarly, "a plurality of groups" refers to two or more (including two) groups, and "a plurality of sheets" refers to two or more (including two) sheets.

The orientation or positional relationships indicated by the terms "upper", "lower", "top", "bottom", "front", "rear", "inner", "outer" and the like are used in the present application only for facilitating the description of the present application, rather than indicating or implying that the device referred to must have a particular orientation or be constructed and operated in a particular orientation, and therefore shall not be interpreted as limiting the protection scope of the present application.

The battery cell may include a lithium-ion secondary battery, a lithium-ion primary battery, a lithium-sulfur battery, a sodium-lithium-ion battery, a sodium-ion battery, a magnesium-ion battery, or the like, which will not be limited in the embodiments of the present application. The battery cell may be in a cylindrical shape, a flat shape, a cuboid shape or another shape, which is also not limited in the embodiments of the present application. The battery cells are generally classified into three types depending on the encapsulating manners: cylindrical battery cells, prismatic cells battery and pouch battery cells, which is also not limited in the embodiments of the present application.

Current battery cells usually include a casing and an electrode assembly housed in the casing, and the casing is filled with electrolyte. The electrode assembly is mainly formed by stacking or winding a first electrode plate and a second electrode plate of opposite polarities, and a separator is usually provided between the first electrode plate and the second electrode plate. The portions of the first electrode plate and the second electrode plate coated with active material constitute a main body part of the electrode assembly, and the portions of the first electrode plate and the second electrode plate not coated with the active material respectively constitute a first tab and a second tab. In a lithium-ion battery, the first electrode plate may be a positive electrode plate, including a positive current collector and a positive electrode active material layer arranged on both sides of the positive current collector. The material of the positive current collector may be, for example, aluminum, and the positive electrode active material may be, for example, lithium cobalt oxide, lithium iron phosphate, ternary lithium, lithium manganate, or the like. The second electrode plate may be a negative electrode plate, including a negative current collector and a negative electrode active material layer arranged on both sides of the negative current collector. The material of the negative current collector may be, for example, copper, and the negative electrode active material may be, for example, graphite, silicon or the like. The first tab and the second tab may be located at one end of the main body part jointly or at two ends of the main body part respectively. In the charging and discharging process of the battery cell, the positive electrode active material and the negative electrode active material react with the electrolyte, and the tabs are connected to the terminals to form a current loop.

After the surface of the current collector is coated with active material, the electrode plate of the electrode assembly needs to be dried in an oven. During the drying process of the electrode plate, air pressure on the two opposite surfaces is controlled to keep the electrode plate in a suspended state.

The inventor noticed that currently, in order to ensure the drying effect of the coating layer, the coated portion of the electrode plate needs to stay in the oven for a long time, resulting in low drying efficiency of the electrode plate. Moreover, coating and drying are two successive process steps. During this process, the electrode plate is always in the moving state, so low drying efficiency is also the main factor limiting improvements to the speed of electrode plate coating. Moreover, during the drying process, the electrode plate is prone to problems such as scratches, curling or deviation.

In order to solve the problem of low drying efficiency, the inventor thought of adding both a hot air device and an infrared device in the oven, and using thermal oil as the heating source of the hot air device. At the same time, the thermal oil will also stimulate the infrared device to emit infrared rays to dry the electrode plate. Although this method can optimize the drying effect of the coating layer to a certain extent and improve the drying efficiency of the coating layer, it will lead to a complex structure of the heating device, and the introduction of thermal oil will also affect the safety in operation of the oven, and easily contaminate the internal environment of the oven. Moreover, this method cannot solve the problems such as scratching, curling or deviation of the electrode plate during the drying process.

In order to avoid excessively increasing the structural complexity of the heating part, the inventor thought of increasing the time the electrode plate stays in the oven, so that the heating time of the electrode plate can be extended without lowering the coating speed. This requires extending the running path of the electrode plate in the box. Moreover, the electrode plate can be supported to maintain a stable position, so that the risk of problems such as scratching, curling or deviation of the electrode plate occurring may be decreased occur during the drying process.

According to this idea, the present application provides an improved electrode plate heating device, including: a box, two roller groups and a heating assembly. The two roller groups are installed in the box. The two roller groups are spaced apart along the first direction. Each roller group includes a plurality of first guide rollers spaced apart along the second direction for the electrode plate to be alternately wound around all the first guide rollers in the two roller groups successively, the second direction being perpendicular to the first direction. The heating assembly is installed in the box and configured to heat the electrode plate after coated.

In this electrode plate heating device, by arranging a plurality of first guide rollers in the box and winding the electrode plate around the first guide rollers, the extension length of the electrode plate in the box can be extended, so that the electrode plate can stay longer in the box, which can optimize the drying effect and improve the drying efficiency, thereby indirectly increasing the coating speed of the electrode plate.

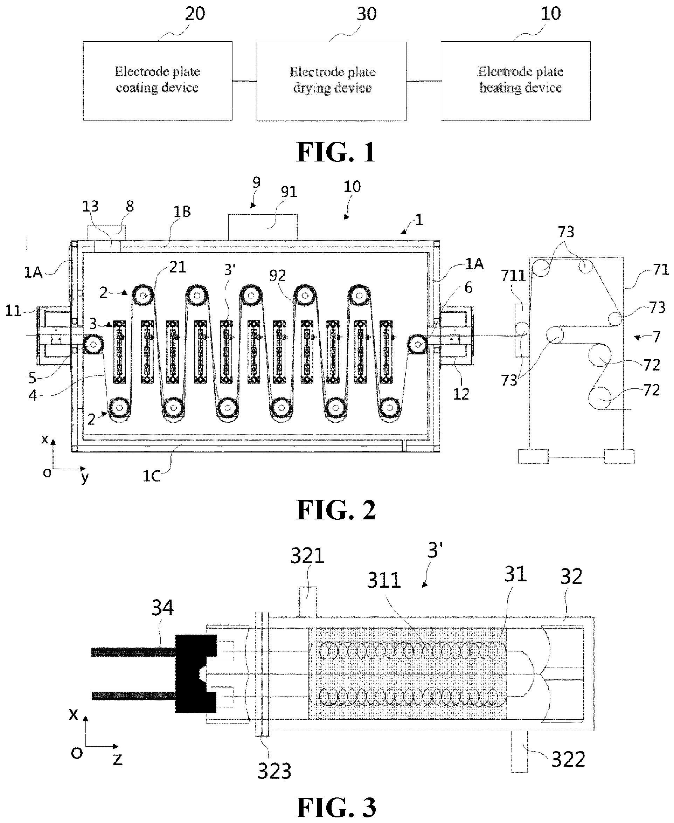

As shown in Fig. 1, this electrode plate heating device can be used in an electrode plate production system. The electrode plate production system can include: an electrode plate coating device 20, an electrode plate drying device 30 and an electrode plate heating device 10.

The electrode plate coating device 20 is configured to apply an active material onto the electrode plate 4 by coating, and, for example, may be a coater. If the electrode plate 4 is a positive electrode plate, then positive electrode active material is coated. If the electrode plate 4 is a negative electrode plate, then positive electrode active material is coated. The electrode plate drying device 30 is arranged downstream of the electrode plate coating device 20 and configured to bake the coated electrode plate 4, such as using an oven. The electrode plate heating device 10 is arranged downstream of the electrode plate drying device 30 and configured to reheat the baked electrode plate 4.

The electrode plate 4 may be of a long strip-shaped structure. During the coating and heating process of the electrode plate 4, the electrode plate 4 can be controlled by the electrode plate coating device 20 to move at a preset coating speed. The electrode plate coating device 20, the electrode plate drying device 30 and the electrode plate heating device 10 are arranged in sequence along the movement direction of the electrode plate 4.

In this electrode plate production system, the electrode plate heating device 10 is provided downstream of the electrode plate drying device 30. The electrode plate 4 can be preliminarily dried by the electrode plate drying device 30, and then enters the electrode plate heating device 10 for secondary drying. In this way, the drying effect of the electrode plate 4 can be improved, the residence time of the electrode plate 4 in the electrode plate drying device 30 can be shortened, the movement speed of the electrode plate 4 can be increased, and consequently the coating rate of the electrode plate 4 is improved.

Optionally, this electrode plate heating device 10 can also be directly used as the electrode plate drying device 30. The electrode plate drying device 30 using the improvements of the present application can also improve the drying efficiency of the electrode plate 4.

In some embodiments, the electrode plate production system may also include a windup device that is provided downstream of the electrode plate heating device 10 and configured to wind up the heated and dried electrode plate 4 for use in preparing the electrode assembly.

The structure of the electrode plate heating device 10 will be described below.

In some embodiments, as shown in Fig. 2, the electrode plate heating device 10 of the present application includes: a box 1, two roller groups 2 and a heating assembly. The two roller groups 2 are installed in the box 1. The two roller groups 2 are spaced apart along the first direction x. Each roller group 2 includes at least one first guide roller 21 for the electrode plate 4 to be alternately wound around all the first guide rollers 21 in the two roller groups 2 successively. The heating assembly 3 is installed in the box 1 and configured to heat the electrode plate 4 after coated.

The box 1 may be of a cuboid or other shape, and the plurality of first guide rollers 21 in each roller group 2 can be fixed to the box 1 through its ends. For example, an installing hole is provided on the inner wall of the box 1. The end of the first guide roller 21 is inserted into the installation hole to achieve installation. The first guide roller 21 may be of a cylindrical shape and includes at least a guide section along its axial direction. The outer surface of the guide section may be wound around by the electrode plate 4 to provide stable support for the electrode plate 4.

Optionally, the roller group 2 is provided with one first guide roller 21, or each roller group 2 may include a plurality of first guide rollers 21 spaced apart along the second direction y, including the case where the centers of the plurality of first guide rollers 21 are situated in the same straight line and the case where the centers of the plurality of first guide rollers 21 are deviated from the same straight line along the first direction x. The second direction y is perpendicular to the first direction x.

The distance between two adjacent first guide rollers 21 in the same roller group 2 may be equal, or the distance between two adjacent first guide rollers 21 in one roller group 2 may be the same as the distance between two adjacent first guide rollers 21 in the other roller group 2, so that the electrode plate 4 remains in a uniform extension path, thereby maintaining a uniform tension force on the electrode plate 4. Along the second direction y and from one end of the box 1 to the other end, the electrode plate 4 is alternately wound around all the first guide rollers 21 in the two roller groups 2 successively, so that the electrode plate 4 extends in a wavy shape.

The heating assembly 3 is installed in the box 1 and configured to heat the electrode plate 4 after coated. The heating assembly 3 may adopt electric heating, infrared heating, hot air heating or the like.

In this embodiment, two roller groups 2 are provided in the box 1, and the electrode plate 4 is alternately wound around the plurality of first guide rollers 21 in the two roller groups 2 successively to form a curved extension path, which can extend the extension length of the electrode plate 4 in the box 1. If the electrode plate 4 is to run at the same speed, then the electrode plate 4 is allowed to stay longer in the box 1 during heating, which can optimize the drying effect and improve the drying efficiency. If the same drying effect is to be achieved for the electrode plate 4, then the running speed of the electrode plate 4 can be increased. Therefore, this electrode plate heating device 10 can optimize the drying effect and improve the drying efficiency, thereby indirectly increasing the coating speed of the electrode plate 4.

Moreover, the electrode plate 4 is supported by the first guide roller 21 in the box 1 and can remain in a stable position, which prevents deviation, curling or scratching, and improves the process performance of the dried electrode plate 4. In addition, the support from the first guide roller 21 keeps the electrode plate 4 in a tightened state under a certain tension force, preventing the electrode plate 4 from wrinkling during the heating process. Moreover, the electrode plate 4 can be in a moving state during the heating process without easily becoming bent and shaped, which facilitates subsequent windup.

In some embodiments, the plurality of guide rollers 21 in the respective two roller groups 2 are arranged to be staggered along the second direction y. For example, in the second direction y, the first guide roller 21 in one roller group 2 may be located at the middle position between two adjacent first guide rollers 21 in the other roller group 2.

This embodiment provides a wavy shape of the extension path of the electrode plate 4, which can reduce the bending degree of the electrode plate 4 and facilitate windup of the heated electrode plate 4. Wrinkles on the placed electrode plate 4 affect the performance of the electrode assembly.

Alternatively, the plurality of first guide rollers 21 of the respective two roller groups 2 may also be arranged directly opposite to each other along the second direction y.

In some embodiments, the axis of the first guide roller 21 is arranged along a third direction z, the third direction z being perpendicular to the first direction x and the second direction y.

This arrangement facilitates installation of the first guide rollers 21, and after the electrode plate 4 enters the box 1 perpendicular to the first direction x, it can be smoothly wound around the first guide rollers 21, preventing the electrode plate 4 from twisting, and allowing the electrode plate 4 to move more smoothly in the box 1, so that various positions in the electrode plate 4 are heated uniformly.

In some embodiments, the first guide rollers 21 are rotatably arranged around their own axes, and the first guide rollers 21 in the two roller groups 2 rotate in opposite directions. For example, all the first guide rollers 21 in the two roller groups 2 can maintain the same rotation rate, so that the tension force on the electrode plate 4 is consistent along the length direction.

In order to rotate the first guide roller 21, as shown in Fig. 2, the electrode plate heating device 10 may further include a driving assembly 9. The driving assembly 9 includes: a power component 91 and a flexible transmission component 92. The power component 91 may be arranged outside the box 1, and may be, for example, an electric motor, a motor or the like. The flexible transmission component 92 is wound around the plurality of first guide rollers 21, and the first guide rollers 21 are rotatably arranged around their own axes. The driving component drives the plurality of first guide rollers 21 to rotate through the flexible transmission component 92. For example, the flexible transmission component 92 may be a belt, a chain or the like. The power component 91 can transmit power to the flexible transmission component 92 through a driving wheel, and the driving wheel may be selected from a pulley, a sprocket, or the like.

The portion of the first guide roller 21 mated with the flexible transmission component 92 and the portion mated with the electrode plate 4 are staggered along the axis of the first guide roller 21. For example, the portion of the first guide roller 21 mated with the flexible transmission component 92 is located in the end area, and the portion mated with the electrode plate 4 is located in the middle area. This structure can separate the driving of the first guide roller 21 from the guiding of the electrode plate 4, preventing mutual interference during operation and improving the reliability in operation of the electrode plate heating device 10.

In one structure, the flexible transmission component 92 and the electrode plate 4 are wound around the first guide roller 21 in the same path, that is, the same power component 91 drives all the first guide rollers 21 to rotate, and the first guide rollers 21 in the two roller groups 2 rotate in opposite directions. This structure can synchronize the rotation of all the first guide rollers 21, maintain a uniform tension force on the electrode plate 4 along the length direction, and reduce the number of power components 91. In another structure, the two roller groups 2 are respectively provided with a power component 91 and a flexible transmission component 92. Such a structure can reduce the installation difficulty of the flexible transmission component 92.

In this embodiment, the first guide roller 21 is rotatably arranged around its own axis, so that the electrode plate 4 and the first guide roller 21 are in rolling friction, which can reduce the friction force experienced by the electrode plate 4 during its movement and prevent scratches or wears to the active material coated over the electrode plate 4, and can control the tension force experienced by the electrode plate 4, enabling more uniform heating of the electrode plate 4. Optionally, the first guide roller 21 may also be kept fixed so that the electrode plate 4 and the first guide roller 21 are in sliding friction.

In some embodiments as shown in Fig. 2, the box 1 is provided with an inlet 11 and an outlet 12, where the inlet 11 and outlet 12 are respectively located at two ends of the box 1 perpendicular to the second direction y, the second direction y being perpendicular to the first direction x. The electrode plate heating device 10 further includes a second guide roller 5 and a third guide roller 6. The second guide roller 5 is arranged at the inlet 11 to guide the electrode plate 4, and the third guide roller 6 is arranged at the outlet 12 to guide the electrode plate 4. Specifically, the inlet 11 and the outlet 12 are respectively located on the two side walls 1A of the box 1 along the second direction y.

In some embodiments, the second guide roller 5 is located between the two roller groups 2 and the inlet 11 along the second direction y at a position corresponding to the inlet 11 along the first direction x, and is configured to guide the length section of the electrode plate 4 from the inlet 11 to the first one of the first guide rollers 21; and/or the third guide roller 6 is located between the two roller groups 2 and the outlet 12 along the second direction y at a position corresponding to the outlet 12 along the first direction x, and is configured to guide the length section of the electrode plate 4 from the last one of the first guide rollers 21 to the outlet 12.

The structure and installation pattern of the second guide roller 5 and the third guide roller 6 may be similar to those of the first guide roller 21. The second guide roller 5 is at a position corresponding to the inlet 11 along the first direction x. The electrode plate 4 may be guided to enter the box 1 in a preset direction (e.g., parallel to the second direction y) via the inlet 11 and can be wound around the first one of the first guide rollers 21 more easily after passing by the second guide roller 5. The third guide roller 6 is at a position corresponding to the outlet 12 along the first direction x. The electrode plate 4 may be guided to arrive at the outlet 12 after passing by the last one of the first guide rollers 21 and is led out via the outlet 12 in a preset direction (e.g., parallel to the second direction y).

In Fig. 2, the inlet 11, the outlet 12, the second guide roller 5 and the third guide roller 6 are all located at the middle position of the box 1 along the first direction x. Alternatively, they may also be located at the positions of the box 1 close to both ends along the first direction. Their positions are determined based on the entry and exit positions of the electrode plate 4 in upstream and downstream devices.

In this embodiment, by arranging the second guide roller 5 and the third guide roller 6, the electrode plate 4 can be guided when it enters the box 1 through the inlet 11 or led out through the outlet 12, preventing the electrode plate 4 from contacting the inlet 11 or outlet 12, which causes wears of the active material, and the electrode plate 4 can be guided to the first one of the first guide rollers 21 or out from the last one of the first guide rollers 21 in a suitable path, while maintaining the tension force on the electrode plate 4.

In some embodiments as shown in Fig. 2, the heating assembly 3 includes multiple sets of heating components 3'. The multiple sets of heating components 3' are located between two roller groups 2 along the first direction x and are spaced apart along the second direction y. Each roller group 2 includes a plurality of first guide rollers 21 spaced apart along the second direction y. In the second direction y, at least one set of heating components 3' is provided between every two adjacent first guide rollers 21 in the same roller group 2, the second direction y being perpendicular to the first direction x.

In some embodiments, the heating components 3' are configured to heat the length section of the electrode plate 4 located on both sides of the heating components 3' along the second direction y.

The plurality of heating components 3' may adopt the same structure. The heating components 3' are located between the two roller groups 2 along the first direction x. For example, they may be located in the middle area between the two roller groups 2. For one of the roller groups 2, a heating component 3' is provided between two adjacent first guide rollers 21. For the other roller group 2, a heating component 3' is also provided between two adjacent first guide rollers 21. Further, a heating component 3' is provided between the second guide roller 5 and the two first guide rollers 21 located at the outermost end of the two roller groups 2 and close to the second guide roller 5, and/or a heating component 3' is provided between the third guide roller 6 and the two first guide rollers 21 located at the outermost ends of the two roller groups 2 and close to the third guide roller 6.

The heating component 3' in this embodiment is located between two adjacent length sections of the electrode plate 4 so that the heating component 3' can heat the length sections on both sides at the same time. Compared with the heating method where the heating component is located at the top or bottom of the box to heat one side of the electrode plate, the heat emitted by the heating assembly 3 can be fully utilized to enable uniform distribution of the energy of the heating assembly 3, increase the heating time for the electrode plate 4 in the box 1, and consequently improve the drying efficiency of the electrode plate 4.

Moreover, the heating components 3' are relatively close to the length sections of the electrode plate 4 on both sides of the heating components 3', so that various heating components 3' can heat different positions of the electrode plate 4 uniformly, so that the drying effect for the electrode plate 4 is consistent along the extension direction, thereby ensuring the process performance of the electrode plate 4.

In addition, for the length section of the electrode plate 4 wound around the two adjacent first guide rollers 21, the heating components 3' are provided on both sides of the electrode plate 4, so that both sides of the electrode plate 4 can be heated at the same time to achieve rapid drying and improve the drying efficiency. Moreover, the inner side and outer side of the coated active material layer can be dried at the same time to prevent the adhesive from floating during the drying process, making the composition of the active material layer uniform, which is beneficial to improving the fitting and binding between the active material layer and the current collector, thereby improving the drying effect of the active material layer.

In some embodiments, each set of heating components 3' includes a plurality of heating components 3' arranged side by side along the first direction x. A single heating component 3' can extend along the third direction z and be installed on the side wall of the box 1 perpendicular to the third direction z. The heating area of the heating component 3' along the third direction z may have a width close to that of the electrode plate 4.

In this embodiment, a larger area of the electrode plate 4 can be dried, thereby enabling more uniform drying of the electrode plate and improving the drying efficiency.

In some embodiments, as shown in Fig. 2, each roller group 2 includes a plurality of first guide rollers 21 spaced apart along the second direction y, and the plurality of first guide rollers 21 in one roller group 2 and the plurality of first guide rollers 21 in the other roller group 2 are alternately arranged and staggered along the second direction y, and in the second direction y, one set of heating components 3' is provided in correspondence with each of the first guide rollers 21. This arrangement can make the heating of the electrode plate 4 more uniform.

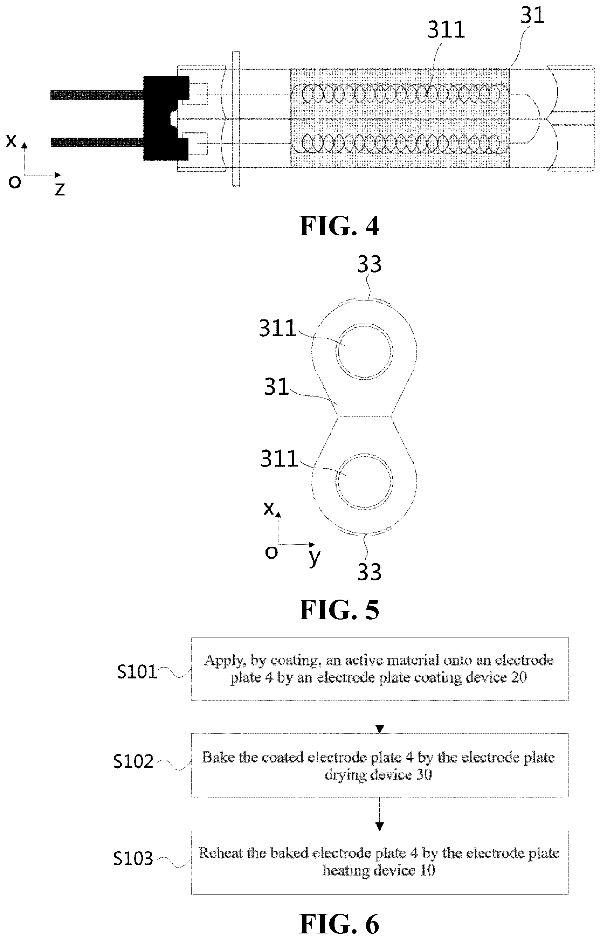

In some embodiments, as shown in Fig. 3, each set of heating components 3' includes at least one heating component 3', and according to the invention each heating component 3' includes a heating element 31 and a protective cover 32, and the heating element 31 is sleeved with the protective cover 32. For example, Fig. 4 is a schematic structural view of the heating element 31. The heating element 31 may be an infrared lamp tube, an electric heating wire, an electric heating tube or the like. The protective cover 32 can surround the heating element 31 to isolate the heating element 31 from the environment outside the protective cover 32.

For a negative electrode plate, the oily solvent NMP (N-methyl pyrrolidone) is used as the coating carrier and releases NMP gas when heated at high temperature. NMP may deflagrate at high temperature. By providing the protective cover 32, deflagration of NMP gas due to direct contact with the high temperature generated by the internal heating element 31 can be prevented, which improves the safety of the heating component 3', thereby extending the service life of the heating component 3' and facilitating installation thereof. In order to isolate the heating element 31 completely from the generated NMP gas, the protective cover 32 needs to have sealing property.

For a positive electrode plate, a water-based solvent is used as the coating carrier and no NMP gas will be released when heated at high temperature. The protective cover 32 is only provided to protect the heating element 31, improve the safety of the heating element 3', and prevent the heating element 31 from overheating and impacting other components in the box 1, thereby extending the service life of the heating component 3' and facilitating installation thereof. There are no critical requirements for the sealing property of the protective cover 32.

In this embodiment, by providing the protective cover 32 for the heating element 31, the high-temperature area of the heating element 31 can be prevented from direct high-temperature heating of the electrode plate 4 or the components in the box 1, so that the heating temperature can be better controlled, thereby improving the safety in operation of the heating component 3', and the heating temperature for the electrode plate 4 can be reliably controlled within the appropriate process temperature range, thereby preventing damage to other components in the box 1 as well.

According to the invention, the heating element 31 is an infrared heating element, the protective cover 32 is made of a light-transmitting material, and at least one of the protective cover 32 and the infrared heating element is provided with light-blocking layers 33 at both ends along the first direction x, so that the infrared light emitted by the infrared heating element irradiates toward both sides along the second direction y.

For example, the infrared heating element may be an infrared lamp tube or an infrared electric heating element which facilitates control of the heating temperature and is relatively simple in structure and use. The protective cover 32 may be made of quartz material or the like and the light-blocking layer 33 may be a gold-plated layer or the like. Since the infrared heating element heats by emitting infrared light, by providing the light-blocking layers 33 at both ends of the protective cover 32 or the infrared heating element, a non-irradiation surface is formed to block infrared light from being emitted toward both ends along the first direction x and prevent infrared light from affecting various components in the box 1. The infrared heating element forms an irradiation surface in the area on both sides without the light-blocking layer 33, so that the infrared light is only irradiated toward the length sections of the electrode plate 4 located on both sides of the infrared heating element.

For example, the infrared lamp tube may be in the shape of "8", and the light blocking layers 33 are respectively arranged on the arced surfaces of the two ends of the infrared lamp tube along the first direction x, and the light blocking layers 33 at the two ends are arranged opposite to each other. Tungsten filaments 311 are provided in both cylindrical areas of the "8" shaped infrared lamp tube. The irradiation areas on both sides can be set symmetrically, each of about 120°.

In this embodiment, the light-transmitting protective cover 32 is provided, and light-blocking layers 33 are provided at both ends of at least one of the protective cover 32 and the infrared heating element along the first direction x, which can not only meet the requirement that the infrared heating element irradiates infrared light to the length sections of the electrode plate 4 on both sides for heating, but also prevent infrared light from irradiating other components in the box 1, and improve the reliability and safety in operation of the electrode plate heating device 10 while ensuring the drying effect of the electrode plate 4.

In some embodiments, the first direction x is the height direction of the box 1. Accordingly, the second direction y is the length direction of the box 1, which is consistent with the advancing direction of the electrode plate 4, and the third direction z is the width direction of the box 1, that is, Fig. 2 shows the sectional view of the electrode plate heating device 10 in the plane perpendicular to the width direction.

Therefore, the two roller groups 2 are spaced apart along the height direction of the box 1 , and the plurality of first guide rollers 21 in each roller group 2 can be spaced apart along the length direction of the box 1. The heating components 3' can extend along the width direction of the box 1. In order to increase the heating area, the plurality of heating components 3' in each heating assembly 3 can be arranged side by side along the height direction of the box 1.

This embodiment provides an up and down wavy shape of the electrode plate 4, that is, the amplitude of the extension curve of the electrode plate 4 is along the height direction of the box 1, and the extension direction of the electrode plate 4 can be adapted to the extension direction of the electrode plate 4 in the two processes of the current electrode plate coating device 20 and electrode plate drying device 30, enabling smoother movement of the electrode plate 4, preventing wrinkles on the electrode plate 4, and improving the process performance of the dried electrode plate 4.

Optionally, the first direction x is the width direction of the box 1. Accordingly, the second direction y is the length direction of the box 1, which is consistent with the advancing direction of the electrode plate 4, and the third direction z is the height direction of the box 1, that is, Fig. 2 shows the sectional view of the electrode plate heating device 10 in the plane perpendicular to the height direction.

In some embodiments, as shown in Fig. 2, the electrode plate heating device 10 further includes a cooling assembly 7 arranged outside the box 1 and located downstream of the lead-out position of the electrode plate 4 and configured to cool the heated electrode plate 4.

In this embodiment, the temperature of the electrode plate 4 can be quickly lowered after drying of the electrode plate 4, thereby preventing impact on the subsequent measurement and windup processes of the electrode plate 4.

In some embodiments, the cooling assembly 7 includes a cooling roller 72 configured to cool the electrode plate 4 wound around it.

One or more cooling rollers 72 can be provided, and the electrode plate 4 is led out from the box 1 and then sequentially wound around various cooling rollers 72 for cooling. Cooling liquid or gas can be passed into the cooling rollers 72.

As shown in Fig. 2, the cooling assembly 7 may further include a cooling box 71 and a fourth guide roller 73, and the cooling roller 72 is provided in the cooling box 71. The cooling box 71 may be provided with an opening 711, which is arranged directly opposite to the outlet 12 of the box 1. A fourth guide roller 73 may be provided at the opening 711. One fourth guide roller 73 may be provided in the cooling box 71 or multiple fourth guide rollers 73 may be provided in sequence in the cooling box 71. The cooling roller 72 may be provided downstream of all the fourth guide rollers 73. The electrode plate 4 is led out via the outlet 12 and then wound around the fourth guide roller 73 at the opening 711, and wound around the fourth guide roller 73 and the cooling roller 72 in the cooling box 71 in sequence before being led out from the cooling box 71. The multiple fourth guide rollers 73 are provided to extend the extension path of the electrode plate 4, increase the cooling rate, and maintain an appropriate tension force on the electrode plate 4.

In this embodiment, by arranging the cooling roller 72 so that the electrode plate 4 can be fitted to the outer surface of the cooling roller 72 for cooling, the cooling effect can be improved through good fitting and with lower cost.

Optionally, the cooling assembly 7 may also use an air nozzle, such as an elongated air nozzle extending along the width direction of the electrode plate 4, to achieve cooling by blowing cold air.

In some embodiments, as shown in Fig. 2, the box 1 is provided with a recovery port 13, and the electrode plate heating device 10 further includes a collection component 8 configured to collect steam and chemical gas generated in the box 1 during heating through the recovery port 13. For example, the collection component 8 may be a fan, an adsorbent or the like.

In this embodiment, considering the fact that the electrode plate 4 will generate water vapor and chemical gases during the heating process, the water vapor and chemical gases in the box 1 are collected by the collection component 8 through negative pressure during heating or after heating is completed, which can keep a dry environment in the box 1, improve drying efficiency, and prevent chemical gases from corroding the electrode plate 4 or other components in the box 1, thereby ensuring the process performance of the dried electrode plate 4 and extending the service life of the electrode plate heating device 10.

The structure of the electrode plate heating device 10 of the present application will be described in detail below with reference to Figs. 1 to 5.

As shown in Fig. 1, the electrode plate heating device 10 is arranged downstream of the electrode plate drying device 30. After the electrode plate 4 is coated with active material in the electrode plate coating device 20, it enters the electrode plate drying device for preliminary drying, and then enters the electrode plate heating device 10 for heating.

As shown in Fig. 2, the electrode plate heating device 10 includes a box 1, two roller groups 2 and a heating assembly. The two roller groups 2 are installed in the box 1 at an interval along the first direction x (the height direction of the box 1). Each roller group 2 includes a plurality of first guide rollers 21 spaced apart along the second direction y (the length direction of the box 1). The electrode plate 4 is alternately wound around all the first guide rollers 21 in the two roller groups 2 successively to form a wave shape with an amplitude along the first direction x.

The two side walls 1A of the box 1 perpendicular to the second direction y are respectively provided with an inlet 11 and an outlet 12. The inlet 11 is provided with a second guide roller 5, and the outlet 12 is provided with a third guide roller 6. The electrode plate 4 enters via the inlet 11 and then is wound around the second guide roller 5, all the first guide rollers 21 and the third guide roller 6 in sequence, and thereafter is led out via the outlet 12. The led-out electrode plate 4 enters the cooling assembly 7 for cooling, so as to facilitate subsequent measurement and windup. The box 1 has a top wall 1B and a bottom wall 1C perpendicular to the first direction x, and both the power component 91 and the recovery port 13 can be provided on the top wall 1B.

The heating assembly 3 is installed in the box 1. The heating assembly 3 may include a plurality of heating components 3'. The portion between every two adjacent first guide rollers 21 on the extension path of the electrode plate 4 may be called a length section. The portion between the first guide roller 21 and the second guide roller 5 and the portion between the first guide roller 21 and the third guide roller 6 may be called length sections. Then a heating component 3' may be provided between every two adjacent length sections of the electrode plate 4 along the second direction y, so that the length sections on both sides can be heated by the heating component 3' at the same time, thereby improving the drying efficiency. Further, a plurality of heating components 3' may be provided between every two adjacent length sections, and the plurality of heating components 3' may be arranged side by side along the first direction x to expand the heating range and improve heating uniformity. The heating component 3' can extend along the third direction z to realize heating of the entire area along the width of the electrode plate 4.

As shown in Fig. 3, the heating component 3' includes a heating element 31 and a protective cover 32. The heating element 31 is sleeved with the protective cover 32. The heating element 31 may be an infrared lamp tube, and the protective cover 32 may be provided with a first opening 321 and a second opening 322 to introduce cold air to ensure positive pressure inside the body of the protective cover 32. The protective cover 32 is provided with a flange 323 for installing the heating component 3' on the box 1.

As shown in Fig. **4****,** which is a schematic side structural view of the heating element 31, the end of the heating element 31 extending out of the protective cover 32 is provided with two lead out wires 34. A tungsten filament 311 is provided in the heating element 31. The tungsten filament 311 is wrapped with a ceramic non-metal material on its outer side to provide insulation and protection.

As shown in Fig. 5, a schematic end structural view of the heating element 31 is shown. The heating element 31 is an infrared heating element, such as an infrared lamp tube. The protective cover 32 is made of a light-transmitting material. The infrared lamp tube may be in the shape of "8", and the light blocking layers 33 are respectively arranged on the arced surfaces of the two ends of the infrared heating element along the first direction x, and the light blocking layers 33 at the two ends are arranged opposite to each other. Tungsten filaments 311 are provided in both cylindrical areas of the "8" shaped infrared lamp tube.

By arranging light-blocking layers 33 at both ends of the infrared heating element, a non-irradiation surface is formed to block infrared light from being emitted toward both ends along the first direction x and prevent the infrared light from affecting various components in the box 1. The infrared heating element forms an irradiation surface in the area on both sides without the light-blocking layer 33, so that the infrared light is only irradiated toward the length sections of the electrode plate 4 located on both sides of the infrared heating element.

Optionally, since the heating component 3' has a relatively high operating temperature, cold air can be introduced for cooling. In addition, a temperature sensor may also be provided on the surface of the heating component 3' to detect the operating temperature of the heating component 3' and give an alarm when the operating temperature exceeds a preset temperature. The heating may also be stopped by cutting off the power to meet explosion-proof requirements. By measuring the surface temperature of the heating component 3', the operating temperature of the heating component 3' can be obtained more accurately.

Secondly, the present application provides an electrode plate production method. In some embodiments, as shown in Fig. 6, the electrode plate production method includes:
S101, applying, by the electrode plate coating device 20, an active material onto the electrode plate 4 by coating;
S102, baking, by the electrode plate drying device 30, the coated electrode plate 4; and
S103, reheating, by the electrode plate heating device 10 of the above embodiment, the baked electrode plate 4.

The steps S101~S103 are executed sequentially. In this electrode plate production method, the electrode plate 4 is preliminarily dried by the electrode plate heating device 10 provided downstream of the electrode plate drying device 30, and then enters the electrode plate heating device 10 again for secondary drying. As such, this method can optimize the drying effect of the electrode plate 4, shorten the residence time of the electrode plate 4 in the electrode plate drying device 30, increase the movement speed of the electrode plate 4, and consequently increase the coating rate of the electrode plate 4.

In some embodiments, the electrode plate 4 is in the moving state during the coating, baking, and reheating processes of the electrode plate 4. This method can make the coating process of the electrode plate 4 more continuous, coat the active material over the matrix more uniformly, and improve the coating efficiency.

## Claims

1. An electrode plate heating device (10), comprising:
a box (1);
two roller groups (2) installed in the box (1), where the two roller groups (2) are spaced apart along a first direction (x), and each roller group (2) comprises at least one first guide roller (21) for the electrode plate (4) to be alternately wound around all the first guide rollers (21) in the two roller groups (2) successively; and
a heating assembly (3) installed in the box (1) and configured to heat the electrode plate (4) after coated;
wherein the heating assembly (3) comprises multiple sets of heating components (3'), the multiple sets of heating components (3') are located between the two roller groups (2) along the first direction (x) and are spaced apart along a second direction (y), each of the roller groups (2) comprises a plurality of first guide rollers (21) spaced apart along the second direction (y), and in the second direction (y), at least one set of heating components (3') is provided between every two adjacent first guide rollers (21) in the same roller group (2), the second direction (y) being perpendicular to the first direction (x),
wherein the heating component (3') is configured to heat the length sections of the electrode plate (4) located on both sides of the heating component (3') along the second direction (y),
wherein each set of heating components (3') comprises at least one heating component (3'), and each heating component (3') comprises a heating element (31) and a protective cover (32), the heating element (31) being sleeved with the protective cover (32), and
wherein the heating element (31) is an infrared heating element, the protective cover (32) is made of a light-transmitting material, and **characterized in that** at least one of the protective cover (32) and the infrared heating element is provided with a light-blocking layer (33) at both ends along the first direction (x), so that the infrared light emitted by the infrared heating element irradiates towards both sides along the second direction (y).

2. The electrode plate heating device (10) according to claim 1, wherein each roller group (2) comprises a plurality of first guide rollers (21) spaced apart along a second direction (y), the second direction (y) being perpendicular to the first direction (x);
and/or, wherein the first guide rollers (21) in the respective two roller groups (2) are arranged to be staggered along the second direction (y);
and/or, wherein the axis of the first guide roller (21) is arranged along a third direction (z), the third direction (z) being perpendicular to the first direction (x);
and/or, wherein the first guide rollers (21) are rotatably arranged around their own axes, and the rotation direction of the first guide rollers (21) in one of the roller groups (2) is opposite to that of the first guide rollers (21) in the other roller group (2).

3. The electrode plate heating device (10) according to any one of claims 1 to 2, wherein the box (1) is provided with an inlet (11) and an outlet (12), and the inlet (11) and the outlet (12) are respectively located at two ends of the box (1) along the second direction (y), the second direction (y) being perpendicular to the first direction (x); and
the electrode plate heating device (10) further comprises a second guide roller (5) and a third guide roller (6), where the second guide roller (5) is arranged at the inlet (11) to guide the electrode plate (4), and the third guide roller (6) is arranged at the outlet (12) to guide the electrode plate (4).

4. The electrode plate heating device (10) according to claim 3, wherein
the second guide roller (5) is located between the two roller groups (2) and the inlet (11) along the second direction (y) at a position corresponding to the inlet (11) along the first direction (x), and is configured to guide the length section of the electrode plate (4) from the inlet (11) to the first one of the first guide rollers (21); and/or
the third guide roller (6) is located between the two roller groups (2) and the outlet (12) along the second direction (y) at a position corresponding to the outlet (12) along the first direction (x), and is configured to guide the length section of the electrode plate (4) from the last one of the first guide rollers (21) to the outlet (12).

5. The electrode plate heating device (10) according to any one of claims 1 to **4,**
wherein each set of heating components (3') comprises a plurality of heating components (3') arranged side by side along the first direction (x).

6. The electrode plate heating device (10) according to any one of claims 1 to 5, wherein each of the roller groups (2) comprises a plurality of first guide rollers (21) spaced apart along the second direction (y), the plurality of first guide rollers (21) in one of the roller groups (2) and the plurality of first guide rollers (21) in the other roller group (2) are alternately arranged and staggered along the second direction (y), and in the second direction (y), a set of heating components (3') is provided in correspondence with each of the first guide rollers (21).

7. The electrode plate heating device (10) according to any one of claims 1 to 6, wherein the first direction (x) is the height direction of the box (1).

8. The electrode plate heating device (10) according to any one of claims 1 to 7, further comprising a cooling assembly (7) arranged outside the box (1) and configured to cool the heated electrode plate (4).

9. The electrode plate heating device (10) according to claim 8, wherein the cooling assembly (7) comprises a cooling roller (72) configured to cool the electrode plate (4) wound around it.

10. The electrode plate heating device (10) according to any one of claims 1 to 9, wherein the box (1) is provided with a recovery port (13), and the electrode plate heating device (10) further comprises a collection component (8) configured to collect steam and chemical gases generated in the box (1) during the heating process through the recovery port (13).

11. An electrode plate production system, comprising:
an electrode plate coating device (20) configured to apply an active material onto the electrode plate (4) by coating;
an electrode plate drying device (30) arranged downstream of the electrode plate coating device (20) and configured to bake the coated electrode plate (4); and
the electrode plate heating device (10) according to any one of claims 1 to 10 that is arranged downstream of the electrode plate drying device (30) and configured to reheat the baked electrode plate (4).

12. An electrode plate production method, comprising:
applying, by an electrode plate coating device (20), an active material onto the electrode plate (4) by coating;
baking, by an electrode plate drying device (30), the coated electrode plate (4); and
reheating, by the electrode plate heating device (10) according to any one of claims 1 to 10, the baked electrode plate (4).

13. The electrode plate production method according to claim 12, wherein during the processes of coating, baking and reheating the electrode plate (4), the electrode plate (4) is in a moving state.

## Patentansprüche

1. Elektrodenplattenheizvorrichtung (10), die Folgendes umfasst:
ein Gehäuse (1),
zwei Rollengruppen (2), die in dem Gehäuse (1) installiert sind, wobei die beiden Rollengruppen (2) in einer ersten Richtung (x) beabstandet sind und jede Rollengruppe (2) mindestens eine erste Umlenkrolle (21) umfasst, wobei die Elektrodenplatte (4) der Reihe nach abwechselnd um alle ersten Umlenkrollen (21) in den beiden Rollengruppen (2) gewunden ist, und
eine Heizbaugruppe (3), die in dem Gehäuse (1) installiert und so ausgelegt ist, dass sie die Elektrodenplatte (4) nach dem Beschichten erhitzt,
wobei die Heizbaugruppe (3) mehrere Sätze Heizkomponenten (3') umfasst, die mehreren Sätze Heizkomponenten (3') in der ersten Richtung (x) zwischen den beiden Rollengruppen (2) liegen und in einer zweiten Richtung (y) beabstandet sind, jede der Rollengruppen (2) mehrere in der zweiten Richtung (y) beabstandete erste Umlenkrollen (21) umfasst und in der zweiten Richtung (y) zwischen je zwei benachbarten ersten Umlenkrollen (21) in der gleichen Rollengruppe (2) mindestens ein Satz Heizkomponenten (3') vorgesehen ist, wobei die zweite Richtung (y) im rechten Winkel zur ersten Richtung (x) verläuft,
wobei die Heizkomponente (3') so ausgelegt ist, dass sie die Längsabschnitte der Elektrodenplatte (4) erhitzt, die in der zweiten Richtung (y) auf beiden Seiten der Heizkomponente (3') liegen,
wobei jeder Satz Heizkomponenten (3') mindestens eine Heizkomponente (3') und jede Heizkomponente (3') ein Heizelement (31) und eine Schutzkappe (32) umfasst, wobei die Schutzkappe (32) auf das Heizelement (31) gesteckt ist, und
wobei es sich bei dem Heizelement (31) um ein Infrarotheizelement handelt und die Schutzkappe (32) aus einem lichtdurchlässigen Material hergestellt ist, und
**dadurch gekennzeichnet, dass**
die Schutzkappe (32) und/oder das Infrarotheizelement an beiden Enden in der ersten Richtung (x) mit einer lichtundurchlässigen Schicht (33) versehen ist, so dass das von dem Infrarotheizelement emittierte Infrarotlicht in der zweiten Richtung (y) zu beiden Seiten hin abgestrahlt wird.

2. Elektrodenplattenheizvorrichtung (10) nach Anspruch 1, wobei jede Rollengruppe (2) mehrere erste Umlenkrollen (21) umfasst, die in einer zweiten Richtung (y) beabstandet sind, wobei die zweite Richtung (y) im rechten Winkel zur ersten Richtung (x) verläuft,
und/oder wobei die ersten Umlenkrollen (21) in den beiden jeweiligen Rollengruppen (2) in der zweiten Richtung (y) versetzt angeordnet sind,
und/oder wobei die Achse der ersten Umlenkrolle (21) in einer dritten Richtung (z) angeordnet ist, wobei die dritte Richtung (z) im rechten Winkel zur ersten Richtung (x) verläuft,
und/oder wobei die ersten Umlenkrollen (21) um ihre eigene Achse drehbar angeordnet sind und die Drehrichtung der ersten Umlenkrollen (21) in einer der Rollengruppen (2) der der ersten Umlenkrollen (21) in der anderen Rollengruppe (2) entgegengesetzt ist.

3. Elektrodenplattenheizvorrichtung (10) nach einem der Ansprüche 1 bis 2, wobei das Gehäuse (1) mit einem Eingang (11) und einem Ausgang (12) versehen ist und der Eingang (11) und der Ausgang (12) in der zweiten Richtung (y) jeweils an zwei Enden des Gehäuses (1) liegen, wobei die zweite Richtung (y) im rechten Winkel zur ersten Richtung (x) verläuft, und
die Elektrodenplattenheizvorrichtung (10) ferner eine zweite Umlenkrolle (5) und eine dritte Umlenkrolle (6) umfasst, wobei die zweite Umlenkrolle (5) an dem Eingang (11) angeordnet ist und die Elektrodenplatte (4) umlenkt und die dritte Umlenkrolle (6) an dem Ausgang (12) angeordnet ist und die Elektrodenplatte (4) umlenkt.

4. Elektrodenplattenheizvorrichtung (10) nach Anspruch 3, wobei
die zweite Umlenkrolle (5) in der zweiten Richtung (y) zwischen den beiden Rollengruppen (2) und dem Eingang (11) an einer Stelle liegt, die in der ersten Richtung (x) dem Eingang (11) entspricht, und so ausgelegt ist, dass sie den Längsabschnitt der Elektrodenplatte (4) vom Eingang (11) zur ersten der ersten Umlenkrollen (21) umlenkt, und/oder
die dritte Umlenkrolle (6) in der zweiten Richtung (y) zwischen den beiden Rollengruppen (2) und dem Ausgang (12) an einer Stelle liegt, die in der ersten Richtung (x) dem Ausgang (12) entspricht, und so ausgelegt ist, dass sie den Längsabschnitt der Elektrodenplatte (4) von der letzten der ersten Umlenkrollen (21) zum Ausgang (12) umlenkt.

5. Elektrodenplattenheizvorrichtung (10) nach einem der Ansprüche 1 bis 4,
wobei jeder Satz Heizkomponenten (3') mehrere Heizkomponenten (3') umfasst, die in der ersten Richtung (x) nebeneinander angeordnet sind.

6. Elektrodenplattenheizvorrichtung (10) nach einem der Ansprüche 1 bis 5, wobei jede der Rollengruppen (2) mehrere erste Umlenkrollen (21) umfasst, die in der zweiten Richtung (y) beabstandet sind, die mehreren ersten Umlenkrollen (21) in einer der Rollengruppen (2) und die mehreren ersten Umlenkrollen (21) in der anderen Rollengruppe (2) im Wechsel und in der zweiten Richtung (y) versetzt angeordnet sind und in der zweiten Richtung (y) entsprechend jeder der ersten Umlenkrollen (21) ein Satz Heizkomponenten (3') vorgesehen ist.

7. Elektrodenplattenheizvorrichtung (10) nach einem der Ansprüche 1 bis 6, wobei es sich bei der ersten Richtung (x) um die Höhenrichtung des Gehäuses (1) handelt.

8. Elektrodenplattenheizvorrichtung (10) nach einem der Ansprüche 1 bis 7, die ferner eine Kühlbaugruppe (7) umfasst, welche außerhalb des Gehäuses (1) angeordnet und so ausgelegt ist, dass sie die erhitzte Elektrodenplatte (4) kühlt.

9. Elektrodenplattenheizvorrichtung (10) nach Anspruch 8, wobei die Kühlbaugruppe (7) eine Kühlrolle (72) umfasst, die so ausgelegt ist, dass sie die um sie herumgewundene Elektrodenplatte (4) kühlt.

10. Elektrodenplattenheizvorrichtung (10) nach einem der Ansprüche 1 bis 9, wobei das Gehäuse (1) mit einer Abzugsöffnung (13) versehen ist und die Elektrodenplattenheizvorrichtung (10) ferner eine Auffangkomponente (8) umfasst, die so ausgelegt ist, dass sie Dampf und chemische Gase, die im Verlauf des Erhitzungsprozesses in dem Gehäuse (1) entstehen, über die Abzugsöffnung (13) auffängt.

11. Elektrodenplattenfertigungssystem, das Folgendes umfasst:
eine Elektrodenplattenbeschichtungsvorrichtung (20), die so ausgelegt ist, dass sie durch Beschichten ein aktives Material auf die Elektrodenplatte (4) aufbringt,
eine Elektrodenplattentrockenvorrichtung (30), die stromabwärts von der Elektrodenplattenbeschichtungsvorrichtung (20) angeordnet und so ausgelegt ist, dass sie die beschichtete Elektrodenplatte (4) einbrennt, und
die Elektrodenplattenheizvorrichtung (10) nach einem der Ansprüche 1 bis 10, die stromabwärts von der Elektrodenplattentrockenvorrichtung (30) angeordnet und so ausgelegt ist, dass sie die eingebrannte Elektrodenplatte (4) erneut erhitzt.

12. Elektrodenplattenfertigungsverfahren, das Folgendes umfasst:
Aufbringen eines aktiven Materials auf die Elektrodenplatte (4) durch Beschichten mit einer Elektrodenplattenbeschichtungsvorrichtung (20),
Einbrennen der beschichteten Elektrodenplatte (4) mit einer Elektrodenplattentrockenvorrichtung (30) und
erneutes Erhitzen der eingebrannten Elektrodenplatte (4) mit der Elektrodenplattenheizvorrichtung (10) nach einem der Ansprüche 1 bis 10.

13. Elektrodenplattenfertigungsverfahren nach Anspruch 12, wobei sich die Elektrodenplatte (4) beim Beschichten, Einbrennen und erneuten Erhitzen der Elektrodenplatte (4) in einem Bewegungszustand befindet.

## Revendications

1. Dispositif de chauffage d'électrode en plaque (10), comportant :
un boîtier (1) ;
deux groupes de rouleaux (2) installés dans le boîtier (1), dans lequel les deux groupes de rouleaux (2) sont espacés l'un par rapport à l'autre le long d'une première direction (x), et chaque groupe de rouleaux (2) comporte au moins un premier rouleau de guidage (21) pour l'électrode en plaque (4) à enrouler tour à tour autour de tous les premiers rouleaux de guidage (21) dans les deux groupes de rouleaux (2) successivement ; et
un ensemble chauffant (3) installé dans le boîtier (1) et configuré pour chauffer l'électrode en plaque (4) après le revêtement ;
dans lequel l'ensemble chauffant (3) comporte de multiples jeux de composants chauffants (3'), les multiples jeux de composants chauffants (3') sont situés entre les deux groupes de rouleaux (2) le long de la première direction (x) et sont espacés les uns par rapport aux autres le long d'une deuxième direction (y), chacun des groupes de rouleaux (2) comporte une pluralité de premiers rouleaux de guidage (21) espacés les uns par rapport aux autres le long de la deuxième direction (y), et dans la deuxième direction (y), au moins un jeu de composants chauffants (3') est mis en œuvre tous les deux premiers rouleaux de guidage adjacents (21) dans le même groupe de rouleaux (2), la deuxième direction (y) étant perpendiculaire par rapport à la première direction (x),
dans lequel le composant chauffant (3') est configuré pour chauffer les sections longitudinales de l'électrode en plaque (4) situées des deux côtés du composant chauffant (3') le long de la deuxième direction (y),
dans lequel chaque jeu de composants chauffants (3') comporte au moins un composant chauffant (3'), et chaque composant chauffant (3') comporte un élément chauffant (31) et un couvercle de protection (32), l'élément chauffant (31) étant emmanché avec le couvercle de protection (32), et
dans lequel l'élément chauffant (31) est un élément chauffant infrarouge, le couvercle de protection (32) est constitué d'un matériau transmettant la lumière, et **caractérisé en ce qu'**au moins l'un parmi le couvercle de protection (32) et l'élément chauffant infrarouge est doté d'une couche de blocage de lumière (33) aux deux extrémités le long de la première direction (x), de telle sorte que la lumière infrarouge émise par l'élément chauffant infrarouge irradie vers les deux côtés le long de la deuxième direction (y).

2. Dispositif de chauffage d'électrode en plaque (10) selon la revendication 1, dans lequel chaque groupe de rouleaux (2) comporte une pluralité de premiers rouleaux de guidage (21) espacés les uns par rapport aux autres le long d'une deuxième direction (y), la deuxième direction (y) étant perpendiculaire par rapport à la première direction (x) ;
et/ou, dans lequel les premiers rouleaux de guidage (21) dans les deux groupes de rouleaux respectifs (2) sont agencés de manière à être décalés le long de la deuxième direction (y) ;
et/ou, dans lequel l'axe du premier rouleau de guidage (21) est agencé le long d'une troisième direction (z), la troisième direction (z) étant perpendiculaire par rapport à la première direction (x) ;
et/ou, dans lequel les premiers rouleaux de guidage (21) sont agencés de manière rotative autour de leurs propres axes, et la direction allant dans le sens de la rotation des premiers rouleaux de guidage (21) dans l'un des groupes de rouleaux (2) est opposée à celle des premiers rouleaux de guidage (21) dans l'autre groupe de rouleaux (2).

3. Dispositif de chauffage d'électrode en plaque (10) selon l'une quelconque des revendications 1 à 2, dans lequel le boîtier (1) est doté d'une entrée (11) et d'une sortie (12), et l'entrée (11) et la sortie (12) sont situées respectivement au niveau de deux extrémités du boîtier (1) le long de la deuxième direction (y), la deuxième direction (y) étant perpendiculaire par rapport à la première direction (x) ; et
le dispositif de chauffage d'électrode en plaque (10) comporte par ailleurs un deuxième rouleau de guidage (5) et un troisième rouleau de guidage (6), dans lequel le deuxième rouleau de guidage (5) est agencé au niveau de l'entrée (11) pour guider l'électrode en plaque (4), et le troisième rouleau de guidage (6) est agencé au niveau de la sortie (12) pour guider l'électrode en plaque (4).

4. Dispositif de chauffage d'électrode en plaque (10) selon la revendication 3, dans lequel
le deuxième rouleau de guidage (5) est situé entre les deux groupes de rouleaux (2) et l'entrée (11) le long de la deuxième direction (y) au niveau d'une position qui correspond à l'entrée (11) le long de la première direction (x), et est configuré pour guider la section longitudinale de l'électrode en plaque (4) depuis l'entrée (11) jusqu'au premier des premiers rouleaux de guidage (21) ; et/ou
le troisième rouleau de guidage (6) est situé entre les deux groupes de rouleaux (2) et la sortie (12) le long de la deuxième direction (y) au niveau d'une position qui correspond à la sortie (12) le long de la première direction (x), et est configuré pour guider la section longitudinale de l'électrode en plaque (4) depuis le dernier des premiers rouleaux de guidage (21) jusqu'à la sortie (12).

5. Dispositif de chauffage d'électrode en plaque (10) selon l'une quelconque des revendications 1 à 4,
dans lequel chaque jeu de composants chauffants (3') comporte une pluralité de composants chauffants (3') disposés côte à côte le long de la première direction (x).

6. Dispositif de chauffage d'électrode en plaque (10) selon l'une quelconque des revendications 1 à 5, dans lequel chacun des groupes de rouleaux (2) comporte une pluralité de premiers rouleaux de guidage (21) espacés les uns par rapport aux autres le long de la deuxième direction (y), la pluralité de premiers rouleaux de guidage (21) dans l'un des groupes de rouleaux (2) et la pluralité de premiers rouleaux de guidage (21) dans l'autre groupe de rouleaux (2) sont agencés et décalés tour à tour le long de la deuxième direction (y), et dans la deuxième direction (y), un jeu de composants chauffants (3') est mis en œuvre de manière correspondante avec chacun des premiers rouleaux de guidage (21).

7. Dispositif de chauffage d'électrode en plaque (10) selon l'une quelconque des revendications 1 à 6, dans lequel la première direction (x) est la direction allant dans le sens de la hauteur du boîtier (1).

8. Dispositif de chauffage d'électrode en plaque (10) selon l'une quelconque des revendications 1 à 7, comportant par ailleurs un ensemble de refroidissement (7) agencé à l'extérieur du boîtier (1) et configuré pour refroidir l'électrode en plaque chauffée (4).

9. Dispositif de chauffage d'électrode en plaque (10) selon la revendication 8, dans lequel l'ensemble de refroidissement (7) comporte un rouleau de refroidissement (72) configuré pour refroidir l'électrode en plaque (4) enroulée autour de celui-ci.

10. Dispositif de chauffage d'électrode en plaque (10) selon l'une quelconque des revendications 1 à 9, dans lequel le boîtier (1) est doté d'un orifice de récupération (13), et le dispositif de chauffage d'électrode en plaque (10) comporte par ailleurs un composant de collecte (8) configuré pour collecter de la vapeur et des gaz chimiques générés dans le boîtier (1) pendant le processus de chauffage au travers de l'orifice de récupération (13).

11. Système de production d'électrode en plaque, comportant :
un dispositif de revêtement d'électrode en plaque (20) configuré pour appliquer un matériau actif sur l'électrode en plaque (4) par revêtement ;
un dispositif de séchage d'électrode en plaque (30) agencé en aval du dispositif de revêtement d'électrode en plaque (20) et configuré pour cuire l'électrode en plaque revêtue (4) ; et
le dispositif de chauffage d'électrode en plaque (10) selon l'une quelconque des revendications 1 à 10 qui est agencé en aval du dispositif de séchage d'électrode en plaque (30) et configuré pour réchauffer l'électrode en plaque cuite (4).

12. Procédé de production d'électrode en plaque, comportant les étapes consistant à :
appliquer, par un dispositif de revêtement d'électrode en plaque (20), un matériau actif sur l'électrode en plaque (4) par revêtement ;
cuire, au moyen d'un dispositif de séchage d'électrode en plaque (30), l'électrode en plaque revêtue (4) ; et
réchauffer, par le dispositif de chauffage d'électrode en plaque (10) selon l'une quelconque des revendications 1 à 10, l'électrode en plaque cuite (4).

13. Procédé de production d'une électrode en plaque selon la revendication 12, dans lequel, pendant les processus de revêtement, de cuisson et de réchauffage de l'électrode en plaque (4), l'électrode en plaque (4) est dans un état mobile.
